(19) Europäisches Patentamt / European Patent Office / Office européen des brevets

(11) **EP 3 211 565 A2**

(12) **EUROPEAN PATENT APPLICATION**

(43) Date of publication:
**30.08.2017 Bulletin 2017/35**

(51) Int Cl.:
***G06K 9/00*** *(2006.01)*

(21) Application number: **17153859.8**

(22) Date of filing: **31.01.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.02.2016 CN 201610111405**

(71) Applicant: **Ricoh Company, Ltd.**
**Tokyo 143-8555 (JP)**

(72) Inventors:
- HE, Na
  **Beijing, 100044 (CN)**
- LIU, Dianchao
  **Beijing, 100044 (CN)**
- SHI, Zhongchao
  **Beijing, 100044 (CN)**
- WANG, Gang
  **Beijing, 100044 (CN)**

(74) Representative: **Schwabe - Sandmair - Marx**
**Patentanwälte Rechtsanwalt**
**Partnerschaft mbB**
**Joseph-Wild-Straße 20**
**81829 München (DE)**

(54) **PHYSICAL SCENE MODEL CREATION METHOD AND DEVICE AS WELL AS DRIVER ASSISTANCE METHOD AND DEVICE**

(57) Disclosed is a method for creating a scene model of a physical scene including plural objects. The method includes steps of obtaining an image of the physical scene; extracting a feature(s) of each of the plural objects in the image; determining whether the scene model exists; when it is determined that the scene model does not exist, conducting scene model initialization based on the extracted features of the plural objects so as to obtain the scene model; and outputting the scene model.

FIG.1

**Description**

BACKGROUND OF THE INVENTION

1. Field of the Invention

The present disclosure relates to the field of image processing, more particularly relates to a physical scene model creation method and device as well as a driver assistance method and device.

2. Description of the Related Art

In the field of image processing, the creation of a physical scene model plays a very important role. In a case of taking a road environment as an example, the road environment model is a very important part of the advanced driver assistance system (ADAS). After the road environment model is created, some applications in ADAS such as lane departure warning, autonomous cruise control, and emergency braking may become more accurate, and may be easily carried out.

In a conventional model of a road environment, a single model is created with respect to an object in the road environment, for example, a lane line model or a road edge model. However, since this kind of model includes only a single object, it cannot reflect various objects in a real physical scene and the relationships between the various objects.

SUMMARY OF THE INVENTION

In light of the above, the present disclosure provides a physical scene model creation method and device able to virtualize a physical scene including plural objects, so that it is possible to accurately reflect the plural objects in the physical scene and the relationships between the plural objects.

In addition, the present disclosure also provides a driver assistance method and device. By utilizing the driver assistance method and device, it is possible to virtualize a physical scene including plural objects, to accurately reflect the plural objects in the physical scene and the relationships between the plural objects, and to provide a variety of information useful for a driver on the basis of the virtualized scene model, so that a driver may become safer, and the automation of driving may be much improved.

According to a first aspect of the present disclosure, a method for creating a model of a physical scene including plural objects is provided. The method includes:

    obtaining an image of the physical scene;
    extracting a feature(s) of each of the plural objects in the image;
    determining whether a scene model exists;
    if it is determined that the scene model does not exist, then conducting scene model initialization based on the feature(s) extracted of each of the plural objects in the image, so as to acquire an initialized scene model; and
    outputting the initialized scene model.

According to a second aspect of the present disclosure, a device for creating a model of a physical scene including plural objects is provided. The device includes:

    an obtainment part configured to obtain an image of the physical scene;
    an extraction part configured to extract a feature(s) of each of the plural objects in the image;
    a determination part configured to determine whether a scene model exists;
    an initialization part configured to, if it is determined that the scene model does not exist, conduct scene model initialization based on the feature(s) extracted of each of the plural objects in the image, so as to acquire an initialized scene model; and
    a first output part configured to output the initialized scene model.

According to a third aspect of the present disclosure, a device for creating a model of a physical scene including plural objects is provided. The device includes:

    a processor;
    a memory connected to the processor; and
    computer-executable instructions stored in the memory which, when executed, cause the processor to carry out the above-described method for creating a model of a physical scene including plural objects.

According to a fourth aspect of the present disclosure, a computer program for causing a computer to carry out the above-described method for creating a model of a physical scene including plural objects is provided.

According to a fifth aspect of the present disclosure, a non-transitory computer-readable medium storing computer-executable instructions for execution by a processing system is provided. The computer-executable instructions, when executed, cause the processing system to carry out the above-described method for creating a model of a physical scene including plural objects.

According to a sixth aspect of the present disclosure, a driver assistance method is provided which includes:

obtaining driving information of a vehicle;
acquiring a model of a road environment including plural road components;
generating, based on the driving information and the model of the road environment, operation information for driver assistance; and
outputting the operation information.

The model of the road environment is created by carrying out:

obtaining an image of the road environment;
extracting a feature(s) of each of the plural road components in the image;
determining whether the model of the road environment exists; and
if it is determined that the model of the road environment does not exist, conducting road environment model initialization based on the feature(s) extracted of each of the plural road components in the image, so as to acquire an initialized scene model serving as the model of the road environment.

According to a seventh aspect of the present disclosure, a driver assistance device is provided which includes:

a first obtainment part configured to obtain driving information of a vehicle;
a second obtainment part configured to obtain a model of a road environment including plural road components;
a generation part configured to generate, based on the driving information and the model of the road environment, operation information for driver assistance; and
an output part configured to output the operation information.

The driver assistance device further includes:

a third obtainment part configured to obtain an image of the road environment;
an extraction part configured to extract a feature(s) of each of the plural road components in the image;
a determination part configured to determine whether the model of the road environment exists; and
an initialization part configured to, if it is determined that the model of the road environment does not exist, conduct road environment model initialization based on the feature(s) extracted of each of the plural road components in the image, so as to acquire an initialized scene model serving as the model of the road environment.

According to an eighth aspect of the present disclosure, a driver assistance device is provided which includes:

a processor;
a memory connected to the processor; and
computer-executable instructions stored in the memory which, when executed, cause the processor to carry out the above-described driver assistance method.

According to a ninth aspect of the present disclosure, a computer program for causing a computer to carry out the above-described driver assistance method is provided.

According to a tenth aspect of the present disclosure, a non-transitory computer-readable medium storing computer-executable instructions for execution by a processing system is provided. The computer-executable instructions, when executed, cause the processing system to carry out the above-described driver assistance method.

As a result, since the initialized scene model is created on the grounds of the extracted features of plural objects in the image of an physical scene, i.e., is not created on the basis of the extracted feature(s) of a single object therein, it is possible to virtualize the physical scene including the plural objects, and to accurately reflect the plural objects and the relationships between the plural objects.

In addition, by obtaining driving information and the model of a road environment including plural road components so as to generate and output operation information for driver assistance, it is possible to virtualize the road environment including the plural road components, to accurately reflect the plural road components and the relationships between the plural road components according to the virtualized scene model, and to provide a variety of information helpful for a driver based on the virtualized scene model, so that the driver may become safer, and the automation of driving may be much improved.

BRIEF DESCRIPTION OF THE DRAWINGS

FIG. 1 is a flowchart of a method for creating a model of a physical scene including plural objects, according to an embodiment of the present disclosure;
FIG. 2 is a flowchart of a method for creating a model of a physical scene including plural objects, according to another embodiment of the present disclosure;
FIG. 3 is a flowchart of a driver assistance method according to an embodiment of the present disclosure;
FIG. 4 is a block diagram of a device for creating a model of a physical scene including plural objects, according to an embodiment of the present disclosure;
FIG. 5 is a block diagram of a device for creating a model of a physical scene including plural objects, according to another embodiment of the present disclosure; and
FIG. 6 is a block diagram of a driver assistance device according to an embodiment of the present disclosure.

DETAILED DESCRIPTION OF THE PREFERRED EMBODIMENTS

In order to let those people skilled in the art better understand the present disclosure, hereinafter, the embodiments of the present disclosure will be concretely described with reference to the drawings. However it should be noted that the same symbols, which are in the specification and the drawings, stand for the constructional elements having basically the same function and structure, and the repeated explanations for the constructional elements are omitted.

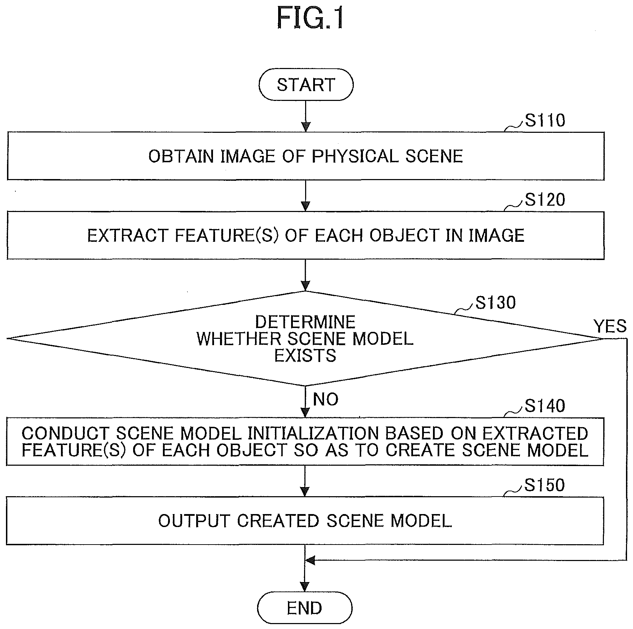

FIG. 1 is a flowchart of a method (also called a "scene model creation method") for creating a model of a physical scene including plural objects, according to an embodiment of the present disclosure.
The scene model creation method may be applied in an electronic device having a processing ability, for example, a computer, a control station mounted on a vehicle, or a server. The physical scene may be any scene in the real world, for example, an indoor scene or an outdoor scene. Additionally, in the physical scene, there may exist various objects. For example, in a case where the physical scene is a road environment, the various objects may include at least two of a road, a road shoulder, a road curbstone, a fence, a crossroads, a traffic sign, a traffic light, a tree, a building, a telephone pole, etc. Of course, those people skilled in the art may understand that these kinds of physical scenes and objects are just examples; that is, the present disclosure is not limited to this.
As presented in FIG. 1, first, in STEP S110, the scene model creation method obtains the image of a physical scene including plural objects.
In particular, the scene model creation method may use a video camera to photograph the physical scene in real time so as to acquire the image. Alternatively, the method may obtain the image, which is captured in advance, from any kind of storage. In a first example, the image may be a grayscale one. In a second example, the image may be a disparity map. Of course, those people skilled in the art may understand that these kinds of images are just examples; that is, the present disclosure is not limited to this. Depending on different image capture and processing approaches, it is also possible to acquire different types of images.
Next, in STEP S120, the scene model creation method extracts a feature(s) of each of the plural objects in the image.
In particular, the feature(s) is one able to reflect the characteristic of each of the plural objects, for example, a grayscale feature, a disparity feature, etc. Of course, those people skilled in the art may understand that these kinds of features are just examples; that is, the present disclosure is not limited this. According to different image formats and different image processing approaches, it is also possible to extract different features.
In addition, the feature(s) of each of the plural objects may be extracted by utilizing any conventional feature extraction approach. As an example, it is possible to use an edge feature extraction approach so as to extract the feature(s). Here it should be noted that since the conventional feature extraction approaches are well known to those people skilled in the art, the related descriptions are omitted.
On the other hand, in STEP S130, the scene model creation method determines whether there is a model (also called a "scene model") of the physical scene.
In particular, as a first example, the scene model creation method may access a local storage so as to determine whether the scene model exists. As a second example, the scene model creation method may access a predetermined address (e.g., a remote storage) via a network so as to determine whether the scene model exists.

Here it should be noted that in FIG. 1, although STEP S130 is located after STEPS S110 and S120, in fact, it is also possible to first carry out STEP S130, or to carry out STEP S130 and STEPS S110 and S120 in parallel.

If it is determined in STEP S130 that the scene model exists, then the process of the scene model creation method ends.

On the other hand, if it is determined in STEP S130 that the scene model does not exist, then scene model creation method goes to STEP S140.

In STEP S140, the method includes, on the basis of the extracted feature(s) of each of the plural objects, conducting scene model initialization so as to obtain an initialized scene model.

In particular, first the scene model creation method may include, on the grounds of the extracted feature(s) of each of the plural objects, conducting object model initialization with respect to the corresponding object so as to acquire an initialized object model of the corresponding object.

More specifically, regarding each of the plural objects, it is possible to select, a predetermined number of times, at least some features from the extracted feature(s). The predetermined number of times may be decided by those people skilled in the art as needed. The selected features may be chosen based on a RANSAC (RANdom Sample Consensus) approach, or may be determined by those people skilled in the art. Alternatively, all the feature(s) extracted may be selected.

Next, it is possible to calculate the parameter(s) of the corresponding object on the basis of the features selected each time, so as to obtain plural object model candidates whose number is equal to the predetermined number of times. Here it should be noted that how to calculate the parameter(s) will be described in detail below.

After that, it is possible to calculate, on the grounds of the extracted feature(s), at least one of the number of support points and a cost of each of the plural object model candidates. The number of support points refers to the matching degree between the extracted feature(s) and an object model candidate, and the cost stands for the deviation degree between the extracted feature(s) and the object model candidate. Those people skilled in the art may utilize any known approach so as to calculate the number of support points and the cost. For example, the number of supporting points may be obtained by counting the number of extracted feature(s) matching an object model candidate, and the cost may be acquired by summing up the distances between the object model candidate and all the extracted feature(s) matching the object model candidate. Here, the distance between an object model candidate and an extracted feature matching the object model candidate may be defined as a minimum distance from the extracted feature to the curve in the object model candidate.

Finally, on the basis of at least one of the matching degree and the cost, it is possible to choose one from the plural object model candidates so as to serve as the initiated object model of the corresponding object.

After obtaining the initiated object models of the plural objects, it is also possible to verify, on the grounds of predetermined relationships between object models, the initiated object models of the plural objects.

More specially, the predetermined relationships between object models may include at least one of a position relationship and a content relationship, which may be properly set by those people skilled in the art according to the physical scene and the plural objects therein.

Thus, as a first example, it is possible to conduct, on the basis of predetermined position relationships between object models, position relationship verification with respect to the initialized object models of the plural objects. In other words, it is determined whether the initialized object models meet the predetermined position relationships.

As a second example, it is possible to conduct, on the grounds of predetermined content relationships of object models, content relationship verification with respect to the initialized object models of the plural objects. In other words, it is determined whether the initiated object models satisfy the predetermined content relationships.

In addition, as a third example, it is also possible to combine the first example and the second example. That is, both the position relationship verification and the content relationship verification may be performed on the initialized object models of the plural objects.

If the verification fails, it is possible to select ones from the object model candidates so as to serve as the initialized object models, and then to carry out the above-described verification process again. On the other hand, if the verification succeeds, it is possible to finally acquire the initialized scene model which includes the initialized object models of the plural objects after the verification.

Here it should be noted that in the above, although an example of obtaining the initialized scene model of the physical scene by acquiring the initialized object model of each of the plural object in the physical scene and determining whether the initialized object models meet the predetermined relationships between object models is described, the present disclosure is not limited to this. That is, those people skilled in the art may also adopt any other proper approach to obtain the initialized scene model. For example, alternatively it is possible to directly acquire the initialized scene model of the physical scene on the grounds of the extracted feature(s) of each of the plural objects and a predetermined scene model constraint condition.

After that, in STEP S150, the initialized scene model of the physical scene is output.

In a first example, the initialized scene model may be output to a local storage installed in an electronic device or a remote storage connected to the electronic device via a network for storing. In a second example, the initialized scene model may be output to a processor installed in an electronic device for processing.

Up to here, the scene model creation method according to this embodiment has been described.

By utilizing the scene model creation method, it is possible to virtualize a physical scene including plural objects so that it is possible to accurately reflect the plural objects in the physical scene and the relationships between the plural objects.

Furthermore, the scene model created by the scene model creation method is not a simple combination of the object models of the plural objects, but is one considering the relationships between the object models of the plural objects. As a result, the scene model created may better meet the conditions of the physical scene.

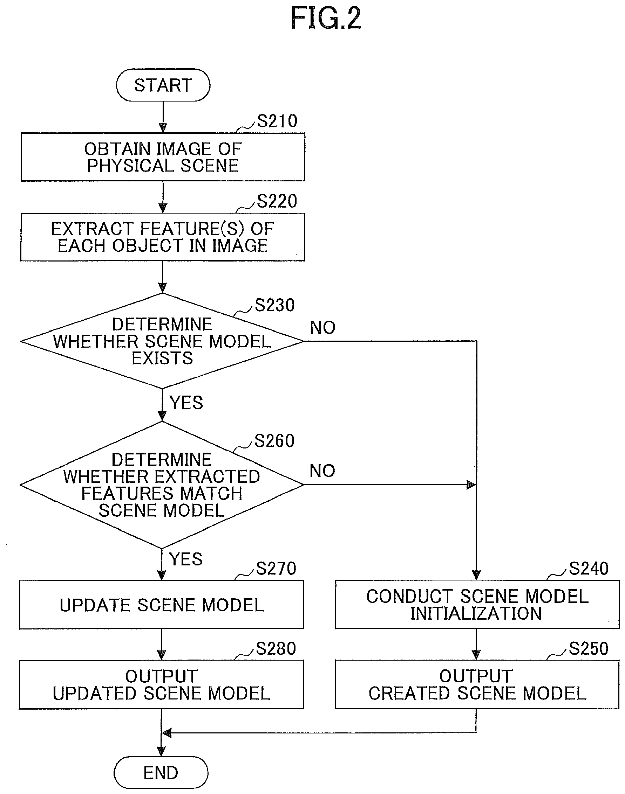

Here it should be noted that as described above, if it is determined in STEP S130 that the scene model exists, then the process of the scene model creation method ends. Alternatively, in a case where the scene model exists, it is possible to update the scene model on the basis of the extracted features of the plural objects in the physical scene. Hereinafter, the process of this case will be described by referring to FIG. 2.

FIG. 2 is a flowchart of a method (also called a "scene model creation method") for creating a model of a physical scene including plural objects, according to another embodiment of the present disclosure.

As presented in FIG. 2, the scene model creation method includes STEPS S210 to S280. Here, since STEPS S210 to S250 are the same as STEP S110 to S150 of FIG. 1, their descriptions are omitted.

In STEP S230, if it is determined that the scene model exits, then the scene model creation method goes to STEP S260. In STEP S260, it is determined whether the extracted features of the plural objects match the scene model. In particular, the extracted features of the plural objects may be input into the scene model so as to determine whether they match the scene model.

More specially, as an example, it is possible to calculate the minimum distance from the extracted feature(s) of each of the plural objects to the scene model. For example, if an extracted feature is a point feature, then the minimum value of the distances from the point to all the lines in the scene model is calculated. Again, for example, if an extracted feature is a line segment feature, then the distance between the line segment and a line, whose slope is closest to the slope of the line segment, in the scene model is calculated.

After that, it is determined whether the minimum distance is less than a predetermined threshold. If the minimum distance is less than the predetermined threshold, then it may be determined that the corresponding extracted feature matches the scene model; otherwise, it may be determined that the corresponding extracted feature does not match the scene model.

Of course, the above-described approach of determining whether the extracted features of the plural objects match the scene model is just an example. That is, those people skilled in the art may adopt any other proper approach to carry out the determination.

After it is determined that the extracted features of the plural objects match the scene model, the scene model creation method goes to STEP S270. In STEP S270, the scene model is updated.

In particular, first it is possible to update, on the basis of the extracted feature(s) of each of the plural objects, the object model of the corresponding object included in the scene model. More specially, it is possible to adopt, for example, the conventional gradient descent approach or Gauss-Newton approach so as to update the object models of the plural objects included in the scene model.

Then, on the grounds of the updated object models of the plural objects and the predetermined relationships between object models, it is possible to update the scene model. For example, it is possible to adopt the above-described verification process so as to determine whether the updated object models of the plural objects satisfy the predetermined relationships between object models. If the verification fails, that means the scene model update also fails. At this time, for example, it is possible to re-update the object models of the plural objects so as to re-update the scene model. On the other hand, if the verification succeeds, that means the scene model update also succeeds.

After that, in STEP S280, the updated scene model is output.

In this way, by utilizing the scene model creation method according to this embodiment, it is possible not only to, in a case where a scene model does not exist, create the scene model but also to, in a case where a scene model exists, update the scene model. As a result, even in a case where the change of a physical scene is relatively small, it is possible to timely make the scene model be identical with the physical scene, so as to improve the matching degree and the processing accuracy.

Additionally, as presented in FIG. 2, if it is determined in STEP S260 that the extracted feature(s) of at least one object does not match the scene model, then, by referring to STEPS S240 and S250 similar to STEPS S140 and S150 of FIG. 1, it is also possible to carry out scene model initialization again on the basis of the extracted feature(s) of each of the plural objects so as to obtain a new initialized scene model, and then to output the new initialized scene model.

In this way, by utilizing the scene model creation method according to this embodiment, if a scene model exists, then it is possible not only to, in a case where the extracted object feature(s) matches the scene model, update the scene model but also to, in a case where the extracted object feature(s) does not match the scene model, conduct scene model initialization again, so that even in a case where the change of the physical scene is relatively big, it is also possible to timely let the scene model be identical with the physical scene so as to improve the matching degree and the processing accuracy.

Up to here, the scene model creation method according to the embodiments of the present disclosure has been illustrated by referring to FIGS. 1 and 2. As described above, the scene model creation method may be used to conduct virtualization with respect to various scenes in the real world. Hereinafter, a case, where the physical scene is a road environment and the objects are road components, will be taken as an example for illustration.

First, by using an image capture unit (e.g., a camera head) provided on a vehicle or a telephone pole in the road environment, it is possible to obtain the image of the road environment.

Then, on the basis of the image, it is possible to extract the features of the road components. The road components may be static objects in the road environment, for example, at least two of a lane, a curbstone, a fence, an intersection, a traffic sign, a traffic light, a tree, a building, and a telephone pole.

After that, it is determined whether a scene model of the road environment exists. If the scene model does not exist, then scene model initialization is conducted with respect to the road environment on the grounds of the extracted features of the road components, so as to acquire an initialized scene model serving as the scene model of the road environment.

In particular, first it is possible to conduct road component model initialization with respect to each road component, so as to obtain an initialized road component model of the corresponding road component.

For example, a road model *RoadModel* may be expressed by the following equation (1).

$$RoadModel(VanishLine1, \quad RoadHeight1, \quad LaneNum, \quad RoadParas,$$
$$LaneWidth, CurbHeight, GuardrailHeight) \quad (1)$$

Here, *VanishLine1* is the position of a vanishing line in the road model; *RoadHeight1* means the road surface height in the road model; *LaneNum* is the number of lanes; *RoadParas* refers to the parameters in the road model; *Lane Width* is the width of each lane; *CurbHeight* stands for the height of each curbstone; and *GuardrailHeight* is the height of each fence.

In particular, the road model has a lot of types, for example, a straight line model, a parabolic line model, a spline model, a hyperbolic line model, a serpentine model, and a 3D (three-dimensional) model. If the straight line model is taken as an example, then the road model may be expressed by the following equation (2).

$$RoadModel \begin{cases} LeftWhiteLine : x_r = a_r y_r + b_r \\ OtherWhiteLines : x_{ri} = a_r y_r + b_r + law_i (y_r - vl_1) \\ Curbs : x_{ri} = a_r y_r + b_r + ch_i (y_r - vl_1) \\ Guardrails : x_{ri} = a_r y_r + b_r + gh_i (y_r - vl_1) \end{cases} \quad (2)$$

Here, *LeftWhiteLine* is a line indicating the left boundary of the road range, i.e., the leftmost white line; *OtherWhiteLines* are other lines indicating the lanes in the road range; *Curbs* means the curbstones; *Guardrails* refers to the fences; $a_r$ and $b_r$ are the curve parameters of the road model, i.e., *RoadParas* in the equation (1); *vl1* is the abbreviation of *VanishLine1* in the equation (1); *law* is the abbreviation of *Lane Width* in the equation (1); *ch* is the abbreviation of *CurbHeight* in the equation (1); *gh* is the abbreviation of *GuardrailHeight* in the equation (1); $x_r$ and $y_r$ indicate the horizontal and vertical coordinates of *LeftWhiteLine*, *OtherWhiteLines*, *Curbs*, and *Guardrails*, respectively; and *i* indicates the *i*-th line, and its range is between 0 and *LaneNum*.

After obtaining the parameters by using the equation (2), it is possible to acquire an initialized road model.

Again, for example, a zebra crossing model *ZebraModel* may be expressed by the following equation (3).

$$ZebraModel(VanishLine2, \quad RoadHeight2, \quad LineNum, \quad ZebraParas,$$
$$LineWidth, LineGapWidth) \quad (3)$$

Here, *VanishLine2* is the position of a vanishing line in the zebra crossing model; *RoadHeight2* is the road surface height in the zebra crosssing model; *LineNum* is the number of lines in the zebra crossing model; *ZebraRaras* means the parameters in the zebra crossing model; *Line Width* refers to the width of each line in the zebra crossing model; and *LineGapWidth* is the gap width between the lines in the zebra crossing model.

In general, the zebra crossing model may be expressed by a linear model. For example, it is possible to use the following equation (4) to express the zebra crossing model.

$$ZebraModel \begin{cases} LeftZebra: x_z = a_z y_z + b_z \\ OtherZebra: x_{zi} = a_z y_z + b_z + liw_i(y_z - vl_2) + \lg w_i(y_z - vl_2) \end{cases} \quad (4)$$

Here, $a_z$ and $b_z$ are the curve parameters of the zebra crossing model, i.e., *ZebraParas* in the equation (3); $vl_2$ is the abbreviation of *YanishLine2* in the equation (3); *liw* is the abbreviation of *LineWidth* in the equation (3); *lgw* is the abbreviation of *LineGapWidth* in the equation (3); $x_z$ and $y_z$ indicate the horizontal and vertical coordinates of *LeftXZebra* and *OtherZebra*, respectively; and *i* indicates the *i*-th line, and its range is between 0 and *LineNum.*

After calculating the parameters according to the equation (4), it is possible to obtain an initialized zebra crossing mode.

Here it should be noted that those people skilled in the art may understand that the above-described expressions of the road model and the zebra crossing are just examples. That is, depending on different roads and different zebra crossings in the physical scene, it is also possible to adopt other proper expressions to indicate the road model and the zebra crossing model.

In addition, on the basis of the teaching of the road model and the zebra crossing model, those people skilled in the art may also acquire the models of other road components in the road environment and their parameters. For example, a telephone pole model *PoleModel* may be expressed by the following equation (5).

$$PoleModel(RoadHeight3, \quad NearPoleDistance, \quad PoleWidth,$$

$$PoleGapDistance) \quad (5)$$

Here, *RoadHeight3* is the road surface height in the telephone pole model; *NearPoleDistance* refers to the distance between the image capture unit and the telephone pole nearest the image capture unit; *PoleWidth* is the width of each pole; and *PoleGapDistance* is the distance between the telephone poles.

The expressions of the models and their parameters of other road components in the road environment are similar to the above, so their descriptions are omitted here.

After acquiring the models of the respective road components, it is possible to carry out verification on the basis of at least one of a predetermined position relationship and a predetermined content relationship between road component models.

If the relationship between the road model and the zebra crossing model is taken as an example, then their position relationship may be expressed by the following equations (6) to (8).

$$VanishingLine1 = VanishingLine2 \quad (6)$$

$$RoadHeight1 = RoadHeight2 \quad (7)$$

$$ZebraModel(x=a_z y+b_z), \; RoadModel(x=a_r y+b_r), \; min \; of \; a_r < \; \forall a_z < \; max \; of \; a_r$$

$$(8)$$

The meaning of the equation (6) is that the position of the vanishing line in the road model is the same as the position of the vanishing line in the zebra crossing model. The meaning of the equation (7) is that the height of the road surface in the road model is the same as the height of the road surface in the zebra crossing model. And the meaning of the equation (8) is that the position of the zebra crossing is located between the leftmost road line and the rightmost road line.

In addition, an example of the content relationship between the road model and the zebra crossing model may be that if the road is a highway, then a zebra crossing does not exist.

Again, for example, regarding the road model and the telephone pole model, their position relationship may be expressed by the following equation (9).

$$RoadHeight1 = RoadHeight3 \qquad (9)$$

The meaning of the equation (9) is that the height of the road surface in the road model is the same as the height of the road surface in the telephone pole model.

In addition, an example of the content relationship between the road model and the telephone pole model may be that if the road is located in a city, then a telephone pole does not exist.

After the verification succeeds, it is possible to obtain a final road environment model which may be expressed by the following equation (10).

$$Model(RoadType, \quad VanishLine, \quad RoadHeight, \quad RoadModel, \quad Relation,$$

$$ZebraModel/BuildingModel/TreeModel/SignModel/PoleModel)$$

$$(10)$$

Here, as described above, *RoadType* refers to the road type, for example, a highway or a urban road; *VanishLine* means the position of the vanishing line; *RoadHeight* stands for the height of the road surface; *Relation* refers to the relationship between the object models; *RoadModel* refers to the road model; *ZebraModel* refers to the zebra crossing model; *BuildingModel* refers to the building model; *TreeModel* refers to the tree model; *SignModel* refers to the traffic sign model; and *PoleModel* refers to the telephone pole model.

Here it should be noted that the road component models included in the equation (10) are just examples. According to different road environments, more or less road component models may be adopted.

In addition, although the scene model creation method has been described by taking a case, where the physical scene is a road environment and the objects are road components, as an example, the present disclosure is not limited to this. That is, the scene model creation method according to the embodiments of the present disclosure may be used to create the models of various physical scenes.

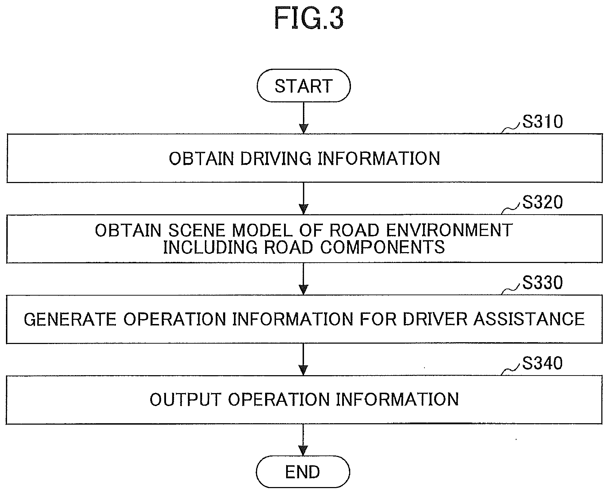

In what follows, an application example of the scene model creation method according to the embodiments of the present disclosure will be illustrated by referring to FIG. 3.

FIG. 3 is a flowchart of a driver assistance method according to an embodiment of the present disclosure.

The driver assistance method may be utilized in the control station of a vehicle, and may also be used in an external electronic device such as a computer located in the vehicle or a remote server. If the driver assistance method is used in the external electronic device, the external electronic device must be able to communicate with the control station of the vehicle.

As presented in FIG. 3, in STEP S310, first the driving information of a vehicle is acquired. In particular, the driving information may include at least one of vehicle speed information, steering wheel information, accelerator information, and indicator lamp information.

On the other hand, in STEP S320, the scene model of the relevant road environment including plural road components is obtained. In particular, the scene model may be created by utilizing the scene model creation method presented in FIG. 1 or FIG. 2.

Here it should be noted that in FIG. 3, although STEP S320 is located after STEP S310, it is also possible to carry out STEP S320 before STEP S310, or carry out the two in parallel.

Next, in STEP S330, operation information for driver assistance is generated on the grounds of the driving information and the scene model.

In particular, it is possible to generate, on the basis of the driving information and the scene model, at least one of speed early warning information, direction early warning information, obstacle early warning information, and emergency braking information.

More specially, if the direction early warning information is taken as an example, then it is possible to determine the road curve in front of the vehicle on the basis of the scene model. In addition, it is also possible to determine the current driving direction of the vehicle on the grounds of information such as the steering wheel information. In this way, it is possible to compare the current driving direction and the road curve in front of the vehicle, and to determine whether the vehicle deviates from its lane. If it is determined that the vehicle has deviated from its lane, then an early warning message may be generated which may serve as an example of the direction early warning information.

**EP 3 211 565 A2**

After that, in STEP S340, the operation information is output.

In particular, in a first example, the vehicle has a display unit. The operation information may be output to the display unit, and then, may be displayed on the display unit.

In a second example, the vehicle has a speaker. The operation information may be output to the speaker, and then, may be output by the speaker.

In a third example, the vehicle has a controller. The operation information may be output to the controller. And then, the controller may control the components included in the vehicle so as to carry out autonomous cruise control or emergency braking, for example.

Of course, aside from the above-described three examples, those people skilled in the art may also adopt any other proper way to output the operation information.

Up to here, the driver assistance method has been described by referring to FIG. 3. By utilizing the driver assistance method, it is possible to accurately conduct warning and control so that the driving safety and automation may be much improved.

In what follows, a device (also called a "scene model creation device") for creating the model of a physical scene including plural objects, according to an embodiment of the present disclosure will be given.

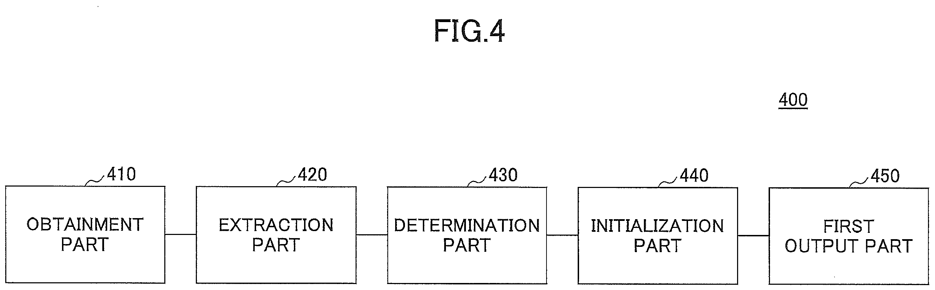

FIG. 4 is a block diagram of a scene model creation device 400.

As presented in FIG. 4, the scene model creation device 400 mainly includes an obtainment part 410, an extraction part 420, a determination part 430, an initialization part 440, and a first output part 450.

The obtainment part 410 is configured to obtain the image of the physical scene, i.e., carry out STEP S110 of FIG. 1.

The extraction part 420 is configured to extract the feature(s) of each of the plural objects, i.e., carry out STEP S120 of FIG. 1.

The determination part 430 is configured to determine whether a scene model exits, i.e., carry out STEP S130 of FIG. 1.

The initialization part 440 is configured to, when it is determined that the scene model does not exit, acquire an initialized scene model on the basis of the extracted feature(s) of each of the plural objects, i.e., carry out STEP S140 of FIG. 1.

The first output part 450 is configured to output the initialized scene model, i.e., carry out STEP S150 of FIG. 1.

In a first example, the scene model creation device 400 may further include a matching part, an update part, and a second output part. The matching part is configured to, when it is determined that the scent model exists, determine whether the extracted features of the plural objects match the scene model, i.e., carry out STEP S260 of FIG. 2. The update part is configured to, when it is determined that the extracted features of the plural objects match the scene model, update the scene model, i.e., carry out STEP S270 of FIG. 2. The second output part is configured to output the updated scene model, i.e., carry out STEP S280 of FIG. 2.

In a second example, the scene model creation device 400 may further include a re-initialization part and a third output part. The re-initialization part is configured to, when it is determined that the extracted feature(s) of at least one of the plural objects does not match the scene model, conduct scene model initialization again on the basis of the extracted features of the plural objects so as to acquire a new initialized scene model, i.e., carry out S240 of FIG. 2. The third output part is configured to output the new initialized scene model, i.e., carry out STEP S250 of FIG. 2.

In a third example, the initialization part 440 includes a sub-initialization part, a verification part, and an acquirement part. The sub-initialization part is configured to, on the grounds of the extracted features of the plural objects, conduct object model initialization with respect to the plural objects so as to obtain the initialized object models of the plural objects. The verification part is configured to, on the basis of the predetermined relationships between object models, conduct verification with respect to the initialized object models of the plural objects. The acquirement part is configured to, when the verification succeeds, acquire the initialized scene model including the initialized object models of the plural objects.

In a fourth example, the sub-initialization part includes a selection part, a first calculation part, a second calculation part, and an object model determination part. The selection part is configured to, regarding each of the plural objects, select at least some features from the extracted feature(s) a predetermined number of times. The first calculation part is configured to, on the basis of the features selected each time, calculate the parameters of the object models of the plural objects so as to obtain plural object model candidates, the number of the plural object model candidates being the same as the predetermined number of times. The second calculation part is configured to, on the grounds of the extracted features of the plural objects, calculate at least one of the number of support points and the cost of each of the plural object model candidates, the number of support points indicating the matching degree between the extracted features and the corresponding object model candidate, the cost indicating the deviation degree between the extracted features and the corresponding object model candidate. The object determination part is configured to, for each of the plural objects, determine, on the basis of the matching degrees or the deviation degrees related to the corresponding object, one from the corresponding plural object model candidates so as to serve as the initialized object model of the corresponding object.

In a fifth example, the verification part includes at least one of a first verification part and a second verification part. The first verification part is configured to, on the basis of the predetermined position relationships between object models, conduct position relationship verification with respect to the initialized object models of the plural objects. The second verification part is configured to, on the grounds of the predetermined content relationships between object models, conduct content relationship verification with respect to the initialized object models of the plural objects.

In a sixth example, the update part includes a first update part and a second update part. The first update part is configured to, on the basis of the extracted features of the plural objects, update the object models of the plural objects. The second update part is configured to, on the grounds of the object models of the plural objects as well as the predetermined relationships between object models, update the scene model.

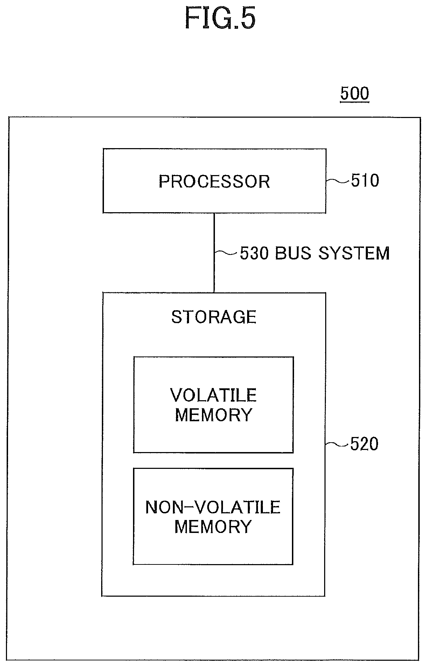

In what follows, a device (also called a "scene model creation device") for creating the model of a physical scene including plural objects, according to another embodiment of the present disclosure will be described by referring to FIG. 5.

FIG. 5 is a block diagram of a scene model creation device 500.

As presented in FIG. 5, the device 500 mainly includes a processor 510 and a storage 520. These kinds of components are connected via a bus system 530, etc. Here it should be noted that the components of the scene model creation device 5 presented in FIG. 5 are just examples. That is, the scene model creation device 500 may further include, for example, an image capture unit for capturing the image of the physical scene.

The processor 510 may be a central processing unit (CPU) or any other processing unit having a data processing ability and/or an instruction processing ability, and may control the functions of the other components of the scene model creation device 5.

The storage 520 may include various computer-readable storage media such as volatile memories and non-volatile memories which may store one or more computer programs. The processor 510 may execute the computer programs so as to achieve the functions of the scene model creation method according to the embodiments of the present disclosure.

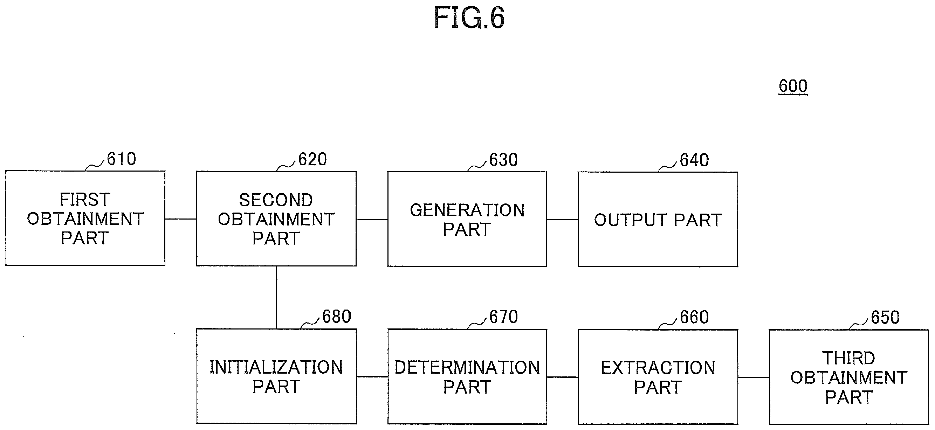

In what follows, a driver assistance device will be described by referring to FIG. 6.

FIG. 6 is a block diagram of a driver assistance device 600.

As presented in FIG. 6, the driver assistance device 600 manly includes a first obtainment part 610, a second obtainment part 620, a generation part 630, an output part 640, a third obtainment part 650, an extraction part 660, a determination part 670, and an initialization part 680.

The first obtainment part 610 is configured to obtain the driving information of a vehicle, i.e., carry out STEP S310 of FIG. 3.

The second obtainment part 620 is configured to obtain the scene model of the relevant road environment including plural road components, i.e., carry out STEP S320 of FIG. 3.

The generation part 630 is configured to, on the basis of the driving information and the scene model of the road environment, generate operation information for driver assistance, i.e., carry out STEP S330 of FIG. 3.

The output part 640 is configured to output the operation information, i.e., carry out STEP S340 of FIG. 3.

The third obtainment part 650 is configured to obtain the image of the relevant road environment, i.e., carry out STEP S110 of FIG. 1.

The extraction part 660 is configured to extract the feature(s) of each of the plural road components in the image, i.e., carry out STEP S120 of FIG. 1.

The determination part 670 is configured to determine whether the scene model of the relevant road environment exists, i.e., carry out STEP S130 of FIG. 1.

The initialization part 680 is configured to, when it is determined that the scene model of the relevant road environment does not exist, carry out road environment model initialization on the basis of the extracted feature (s) of each of the road components, so as to obtain an initialized scene model serving as the scene model of the relevant road environment, i.e., carry out STEP S140 of FIG. 1.

In a first example, the driving information includes at least one of vehicle speed information, steering wheel information, accelerator information, and indicator lamp information.

In a second example, the generation part 630 is configured to, on the grounds of the driving information as well as the scene model of the relevant road environment, generate at least one of speed early warning information, direction early warning information, obstacle early warning information, and emergency braking information.

In a third example, the output part 640 may be a display unit, a speaker, or a controller. The display unit may receive the operation information output from the output part 640, and then, may display the operation information. The speaker may receive the operation information output from the output part 640, and then, may output the operation information. The controller may receive the operation information output from the output part 640, and then, may control the components included in the vehicle on the grounds of the operation information.

In a fourth example, the driver assistance device 600 may be realized by using a structure similar to FIG. 5.

That is, the driver assistance device 600 may mainly include a processor and a storage. These kinds of components are connected via a bus system, etc. The storage may store one or more computer programs. The processor may execute the computer programs so as to achieve the functions of the driver assistance method according to the embodiments of the present disclosure.

Up to here, the preferred embodiments of the present disclosure have been illustrated in detail. However, it should be noted that the above embodiments are just exemplary ones, and the specific structure and operation of them may not be used for limiting the present disclosure.

Moreover, the embodiments of the present disclosure may be implemented in any convenient form, for example, using dedicated hardware or a mixture of dedicated hardware and software. The embodiments of the present disclosure may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G-compliant phone) and so on. Since the embodiments of the present disclosure can be implemented as software, each and every aspect of the present disclosure thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present disclosure is described with reference to the specific embodiments chosen for purpose of illustration, it should be apparent that the present disclosure is not limited to these embodiments, but numerous modifications could be made thereto by those people skilled in the art without departing from the basic concept and technical scope of the present disclosure.

The present application is based on and claims the benefit of priority of Chinese Patent Application No. 201610111405.1 filed on Feb. 29, 2016, the entire contents of which are hereby incorporated by reference.

## Claims

1. A method for creating a scene model of a physical scene including plural objects, comprising:

   obtaining an image of the physical scene;
   extracting a feature(s) of each of the plural objects in the image;
   determining whether the scene model exists;
   when it is determined that the scene model does not exist, conducting scene model initialization based on the extracted features of the plural objects so as to obtain the scene model; and
   outputting the scene model.

2. The method according to claim 1, further comprising:

   when it is determined that the scene model exists, determining whether the extracted features of the plural objects match the scene model;
   when it is determined that the extracted features of the plural objects match the scene model, updating the scene model; and
   outputting the scene model.

3. The method according to claim 2, further comprising:

   when it is determined that the extracted feature(s) of at least one of the plural objects do not match the scene model, re-conducting scene model initialization based on the extracted features of the plural objects so as to obtain a new scene model; and

outputting the new scene model.

4. The method according to claim 1, wherein, the conducting scene model initialization includes
for each of the plural objects, conducting object model initialization based on the extracted feature(s) of the corresponding object so as to obtain an object model of the corresponding object;
conducting, based on predetermined relationships between object models, verification with respect to the object models of the plural objects; and
when the verification succeeds, obtaining the scene model including the object models of the plural objects.

5. The method according to claim 4, wherein, the conducting object model initialization with respect to each of the plural objects includes
selecting, a predetermined number of times, plural features from the corresponding features extracted;
calculating, based on the plural features selected each time, parameters of the corresponding object model so as to obtain plural object model candidates whose number is the same as the predetermined number of times;
calculating, based on the corresponding features extracted, at least one of a number of support points and a cost of each of the plural object model candidates, the number of support points indicating a matching degree between the corresponding features extracted and the corresponding object model candidate, the cost indicating a deviation degree between the corresponding features extracted and the corresponding object model candidate; and
determining, based on at least one of the matching degrees and the deviation degrees, one from the plural object model candidates so as to serve as the object model of the corresponding object.

6. The method according to claim 4, wherein, the conducting verification with respect to the object models of the plural objects includes at least one of
conducting, based on a predetermined position relationship between object models, position relationship verification with respect to the object model of each of the plural objects; and
conducting, based on a predetermined content relationship between object models, content relationship verification with respect to the object model of each of the plural objects.

7. The method according to claim 2, wherein, the updating the scene model includes
updating, based on the extracted features of the plural objects, object models of the plural objects included in the scene model; and
updating, based on both the updated object models and predetermined relationships between object models, the scene model.

8. A device for creating a scene model of a physical scene including plural objects, comprising:

an obtainment part configured to obtain an image of the physical scene;
an extraction part configured to extract a feature(s) of each of the plural objects in the image;
a determination part configured to determine whether the scene model exists;
an initialization part configured to, when it is determined that the scene model does not exist, conduct, based on the extracted features of the plural objects, scene model initialization so as to obtain the scene model; and
a first output part configured to output the scene model.

9. The device according to claim 8, further comprising:

a matching part configured to, when it is determined that the scene model exists, determine whether the extracted features of the plural objects match the scene model;
an update part configured to, when it is determined that the extracted features of the plural objects match the scene model, update the scene model; and
a second output part configured to output the updated scene model.

10. The device according to claim 9, further comprising:

a re-initialization part configured to, when it is determined that the extracted feature(s) of at least one of the plural objects does not match the scene model, re-conduct, based on the extracted features of the plural objects, scene model initialization so as to obtain a new scene model; and
a third output part configured to output the new scene model.

**11.** The device according to claim 8, wherein, the initialization part includes

a sub-initialization part configured to conduct, based on the extracted feature(s) of each of the plural objects, object model initialization with respect to the corresponding object so as to obtain an object model of the corresponding object;

a verification part configured to conduct, based on predetermined relationships between object models, verification with respect to the object models of the plural objects; and

an acquirement part configured to, when the verification succeeds, acquire the scene model including the object models of the plural objects.

**12.** The device according to claim 11, wherein, the sub-initialization part includes

a selection part configured to, for each of the plural objects, select, a predetermined number of times, plural features from the corresponding features extracted;

a first calculation part configured to, for each of the plural objects, calculate, based on the corresponding plural features selected each time, parameters of the corresponding object model so as to obtain plural object model candidates whose number is the same as the predetermined number of times;

a second calculation part configured to, for each of the plural objects, calculate, based on the corresponding features extracted, at least one of a number of support points and a cost of each of the corresponding plural object model candidates, the number of support points indicating a matching degree between the corresponding features extracted and each of the corresponding plural object model candidates, the cost indicating a deviation degree between the corresponding features extracted and each of the corresponding plural object model candidates; and

an object model determination part configured to, for each of the plural objects, determine, based on at least one of the corresponding matching degrees and the corresponding deviation degrees, one from the corresponding plural object model candidates so as to serve as the object model of the corresponding object.

**13.** The device according to claim 11, wherein, the verification part includes at least one of

a first verification part configured to conduct, based on a predetermined position relationship between object models, position relationship verification with respect to the object model of each of the plural objects; and

a second verification part configured to conduct, based on a predetermine content relationship between object models, content relationship verification with respect to the object model of each of the plural objects.

**14.** The device according to claim 9, wherein, the update part includes

a first update part configured to update, based on the extracted features of the plural objects, object models of the plural objects included in the scene model; and

a second update part configured to update, based on both the updated object models and predetermined relationships between object models, the scene model.

**15.** A driver assistance device comprising:

a first obtainment part configured to obtain driving information;

a second obtainment part configured to obtain a scene model of a road environment including plural road components;

a generation part configured to generate, based on the driving information and the scene model, operation information for driver assistance; and

an output part configured to output the operation information,

the driver assistance device further including

a third obtainment part configured to obtain an image of the road environment;

an extraction part configured to extract a feature(s) of each of the plural road components in the image;

a determination part configured to determine whether the scene model exists; and

an initialization part configured to, when it is determined that the scene model does not exist, conduct road environment model initialization based on the extracted features of the plural objects so as to obtain the scene model.

# FIG.1

```
              ( START )
                 │
                 ▼                          S110
┌────────────────────────────────────────────────┐
│       OBTAIN IMAGE OF PHYSICAL SCENE             │
└────────────────────────────────────────────────┘
                 │                          S120
                 ▼
┌────────────────────────────────────────────────┐
│     EXTRACT FEATURE(S) OF EACH OBJECT IN IMAGE   │
└────────────────────────────────────────────────┘
                 │
                 ▼                          S130
          ╱────────────────╲                        YES
         ╱    DETERMINE      ╲───────────────────────────┐
         ╲ WHETHER SCENE MODEL╱                          │
          ╲    EXISTS        ╱                           │
                 │ NO                        S140         │
                 ▼                                        │
┌────────────────────────────────────────────────┐       │
│CONDUCT SCENE MODEL INITIALIZATION BASED ON       │      │
│EXTRACTED FEATURE(S) OF EACH OBJECT SO AS TO      │      │
│CREATE SCENE MODEL                                │      │
└────────────────────────────────────────────────┘       │
                 │                          S150          │
                 ▼                                        │
┌────────────────────────────────────────────────┐       │
│          OUTPUT CREATED SCENE MODEL              │       │
└────────────────────────────────────────────────┘       │
                 │◄────────────────────────────────────── ┘
                 ▼
              ( END )
```

EP 3 211 565 A2

# FIG.2

START

S210
OBTAIN IMAGE OF
PHYSICAL SCENE

S220
EXTRACT FEATURE(S) OF
EACH OBJECT IN IMAGE

S230
DETERMINE
WHETHER SCENE MODEL
EXISTS — NO

YES

S260
DETERMINE
WHETHER EXTRACTED
FEATURES MATCH
SCENE MODEL — NO

YES

S270
UPDATE SCENE MODEL

S240
CONDUCT SCENE MODEL
INITIALIZATION

S280
OUTPUT
UPDATED SCENE MODEL

S250
OUTPUT
CREATED SCENE MODEL

END

# FIG.3

```
          ( START )
              │
              ▼                              ⤳S310
┌─────────────────────────────────────────────────┐
│          OBTAIN DRIVING INFORMATION              │
└─────────────────────────────────────────────────┘
              │
              ▼                              ⤳S320
┌─────────────────────────────────────────────────┐
│   OBTAIN SCENE MODEL OF ROAD ENVIRONMENT         │
│         INCLUDING ROAD COMPONENTS                │
└─────────────────────────────────────────────────┘
              │
              ▼                              ⤳S330
┌─────────────────────────────────────────────────┐
│ GENERATE OPERATION INFORMATION FOR DRIVER ASSISTANCE │
└─────────────────────────────────────────────────┘
              │
              ▼                              ⤳S340
┌─────────────────────────────────────────────────┐
│          OUTPUT OPERATION INFORMATION            │
└─────────────────────────────────────────────────┘
              │
              ▼
           ( END )
```

FIG.4

400

```
 ┌────────────┐   ┌────────────┐   ┌──────────────┐   ┌──────────────┐   ┌──────────────┐
 │    410     │   │    420     │   │     430      │   │     440      │   │     450      │
 │OBTAINMENT  │   │EXTRACTION  │   │DETERMINATION │   │INITIALIZATION│   │   FIRST      │
 │   PART     │   │   PART     │   │    PART      │   │    PART      │   │ OUTPUT PART  │
 └────────────┘   └────────────┘   └──────────────┘   └──────────────┘   └──────────────┘
```

EP 3 211 565 A2

# FIG.5

500

PROCESSOR ~510

~530 BUS SYSTEM

STORAGE

VOLATILE
MEMORY

~520

NON-VOLATILE
MEMORY

# FIG.6

600

FIG.6

FIRST OBTAINMENT PART 610 — SECOND OBTAINMENT PART 620 — GENERATION PART 630 — OUTPUT PART 640

INITIALIZATION PART 680 — DETERMINATION PART 670 — EXTRACTION PART 660 — THIRD OBTAINMENT PART 650

EP 3 211 565 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610111405